# EUROPEAN PATENT APPLICATION

(11) **EP 2 896 910 A1**
(43) Date of publication of application: **22.07.2015**
(21) Application number: 13874242.4
(22) Date of filing: 28.06.2013
(51) Int. Cl.: F24J 3/08

(54) **GEOTHERMAL PROBE**

(30) Priority: 05.02.2013 ES 201300130
(71) Applicant: Salido Gregorio, José, 12550 Almazora (Castellón) (ES)
(72) Inventor: Salido Gregorio, José, 12550 Almazora (Castellón) (ES)
(74) Representative: Pons Ariño, Angel
(86) International application number: PCT/ES2013/070440
(87) International publication number: WO 2014/122334

(57) **Abstract**

The invention allows the energy efficiency of heat transfer to be increased using a geothermal probe for heat exchange with underground water from an aquifer, comprising: an underground borehole (1) intended to contain underground water from an aquifer; a tube (2) for protecting the underground borehole (1); a first pipe (4) housed at least partially in the underground borehole (1); second pipes (5) that extend inside the first pipe (4) and are intended to convey a heat-transfer fluid for exchanging thermal energy with the underground water; and a pump (3) for conveying the underground water from the underground borehole (1) into the first pipe (4), in contact with the second pipes (5).

## Description

### OBJECT OF THE INVENTION

The present invention, as is expressed in the heading of this specification, relates to a geothermal probe device for the exploitation of underground energy or collected water, which has been devised and performed in order to feature numerous, significant advantages over other existing means.

### BACKGROUND OF THE INVENTION

Two systems are known for the exploitation of underground energy: a first system, based on the sinking of pipes known as geothermal probes, through whose interior a heat-transfer fluid flows, enabling the exploitation of underground energy by means of heat exchange with said fluid by a thermal machine or heat pump; a system known as a "closed loop". A second system existing in the current state of the art consists of the extraction of water from underground, a river, lake or the sea, etc., from which the aforementioned energy is obtained by heat transfer at ground level by means of heat exchangers.

In the first of the systems described, the geothermal probe is sunk down a borehole cut in the terrain, or in horizontal trenches, there being a space between the probe and the borehole or trench which is filled with a compact heat-transmitting material, such as bentonite plus cement. Thus, by heat transfer, the fluid collects the energy from the subsoil.

Equipment such as the aforementioned heat pumps exploits the energy from the subsoil, which remains at a constant temperature all the year round, in order to generate heat or cold, for its use in industrial processes or for the air conditioning of buildings by means of the generation of hot or cold water. The quantity of energy recovered from the subsoil depends on the thermal transfer coefficient existing between the sunken pipe through which the fluid flows and the terrain surrounding the same. The drawback of this system is that for the transfer of a particular air conditioning power it is necessary to sink a great length of pipe due to the fact that the thermal transfer is low.

The other existing system mentioned above for the cooling of thermodynamic machinery consists of the extraction of water from the subsoil and the subsequent heat exchange with the same at ground level. Once the energy has been obtained from the water extracted from the subsoil, this water must be tipped elsewhere. The issue posed by this second version is that water must be taken from the lake, river, reservoir or any other source of stored water; when it is obtained from an underground aquifer the water must subsequently be replaced in the same aquifer.

### DESCRIPTION OF THE INVENTION

The present invention describes a geothermal probe for the exchange of heat with underground water, which presents a performance and energetic efficiency considerably greater than those of current equipment due to the fact that the thermal transfer is not performed directly to the terrain, but to underground or stored water, impelled by a pump which causes the water to circulate around concentric or internal pipes which are connectable to a thermal machine such as a tubular heat exchanger.

The present invention relates to a geothermal probe comprised of a water circulation pump connected to a first pipe, also referred to in the technical field of the invention as a casing, and which is external with respect to a tubular exchanger to which, in accordance with practice in the sector, the probe may be connected in order to exchange heat with the underground water. Underground water, impelled by the pump, is forced to circulate through the first pipe. In the interior of this pipe, second, internal pipes run by way of tubes, which may be configured of different materials and in different shapes, and which feature a lesser diameter than the first pipe. A thermal fluid from a heat machine flows through said second pipes; said thermal fluid exchanges the energy with the moving underground water, this being impelled by the pump described above.

The movement of the water impelled by the pump, and which surrounds the internal pipes, causes the thermal transfer of these to be very high, thus enabling a considerable reduction in the length of the geothermal probes, and on the majority of occasions making a single borehole sufficient instead of several, as in the current art, with the resultant saving in investment and improvement in efficiency and viability of this type of installation.

The underground water is preferably expelled by the pump out of the first pipe via a number of openings arranged in said first pipe, allowing the underground water to exit from the first pipe and to return to the aquifer or water source at the same location of its extraction or another nearby location.

As has been mentioned above, an indeterminate number of second pipes of a lesser diameter may run from the thermal machine or heat pump through the interior of the first pipe; these second pipes may be finned, coiled, concentric or may feature any other system which improves heat transfer, arranged as an out-and-back closed loop which makes use of the entire length of the first pipe, to exchange its energy with the surrounding water impelled by the pump.

As has been mentioned above, the first pipe may feature any shape or composition. Likewise, the second pipes may also feature any shape or composition.

On the other hand, the second pipes may be considered to be part of an exchanger which may be replaced by a tubular or plate exchanger such as those known in the current state of the art.

### DESCRIPTION OF THE DRAWINGS

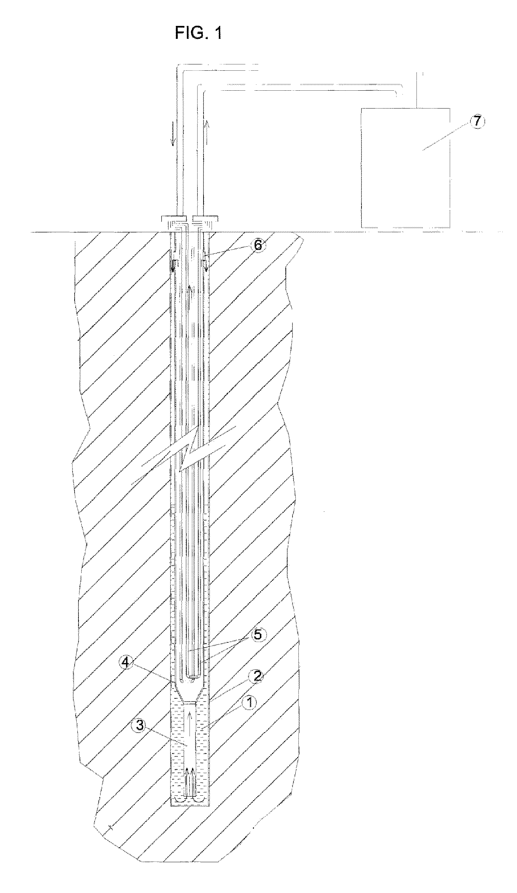

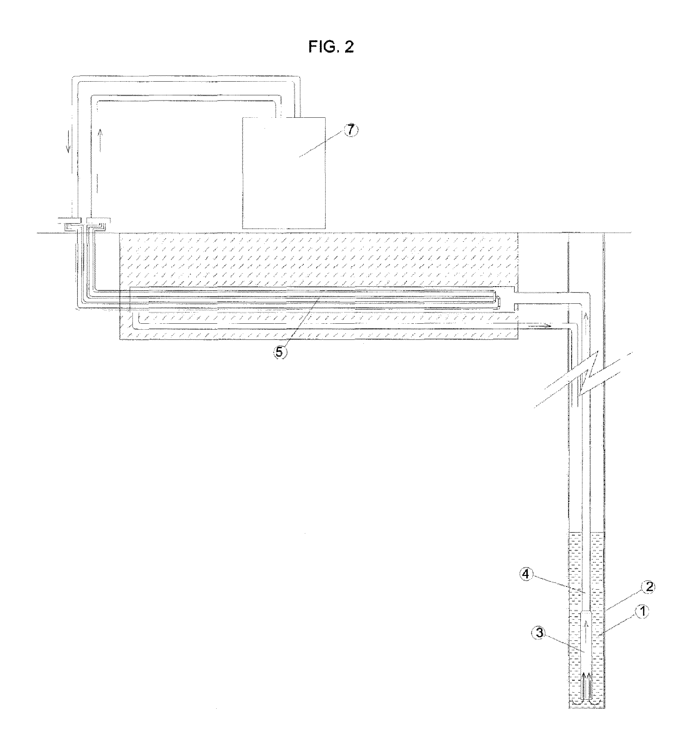

As a supplement to the description made herein, and for the purpose of aiding the better understanding of the characteristics of the invention, in accordance with a preferred example of a practical embodiment of the same, a set of drawings is attached as an integral part of said description wherein, by way of illustration and not limitation, the following is portrayed:
Figure one (FIG. 1) portrays a cross-section of a geothermal probe in accordance with the present invention, within an underground borehole.
Figure two (FIG. 2) portrays a drawing of the invention in a horizontal position and within trenches.

### PREFERRED EMBODIMENT OF THE INVENTION

With the aid of the aforementioned figures 1 and 2, a preferred embodiment of a geothermal probe for the exchange of heat with underground water from an aquifer, which is the object of the invention, is described in detail below.

Figure one (FIG. 1) portrays a cross-section of the geothermal probe, revealing the underground borehole (1) protected by a tube (2) at the base of which a submerged pump (3) is located; this causes underground water from an aquifer to circulate through a first pipe (4) which runs from the base of the underground borehole (1), also called well, to a higher section, where openings (6) are cut; these allow the underground water to exit the first pipe (4) and to return to the aquifer.

Within the first pipe (4), a number of second pipes (5) run; these being of a lesser diameter and connected to a heat machine (7) in a closed loop, and being responsible for the exchange of energy with the underground water flowing through the first pipe (4).

In the embodiment portrayed in figure 1 it may be seen that the first pipe (4) is comprised of a vertical stretch housed at least in part within the aquifer.

Alternatively to what is shown in figure 1, where the first pipe (4) is comprised of a single vertical stretch, the first pipe (4) may be comprised of a plurality of interconnected stretches.

Thus, in figure 2 it may be seen that the underground borehole (1) is external to the aquifer, and also that the first pipe (4) comprises:
- a first stretch, contained within the underground borehole (1); and
- a second horizontal stretch, contained within the aquifer.

Figure two (FIG. 2) portrays the system in a horizontal position within a horizontal borehole (1), also called trench, which is protected by a tube (2) at a much lesser depth than is usual, through which underground water from the subsoil flows, impelled by a pump (3) through the interior of a first pipe (4) within which second pipes (5) of a lesser diameter run, these being connected to a thermal machine (7), heat pump or industrial process.

## Claims

1. A geothermal probe for the exchange of heat with underground water from an aquifer, comprising:
- an underground borehole (1), intended to contain the underground water coming from an aquifer;
- a tube (2), to protect the underground borehole (1);
- a first pipe (4), housed at least partially within the borehole (1); and
- second pipes (5), which run through the interior of the first pipe (4), and are intended to carry a thermal fluid for the exchange of thermal energy with the underground water;
**characterised in that** it further comprises a pump (3) to impel the underground water from the underground borehole (1) to the interior of the first pipe (4) and into contact with the second pipes (5).

2. A geothermal probe, as claimed in claim 1, **characterised in that** it further comprises openings (6) located in the first pipe (4) to allow the underground water to exit the first pipe (4) so as to return to the aquifer.

3. A geothermal probe, as claimed in claim 1, **characterised in that** the first pipe (4) is comprised of a plurality of interconnected stretches.

4. A geothermal probe, as claimed in claim 3, **characterised in that** the underground borehole (1) is external to the aquifer;
and also **in that** the first pipe (4) comprises:
- a first stretch, contained within the underground borehole (1); and
- a second horizontal stretch, contained within the aquifer.

5. A geothermal probe, as claimed in any one of the preceding claims, **characterised in that** the pump (3) is in the interior of the first pipe (1).
